# FASCICULE DE BREVET EUROPEEN

(11) **EP 3 157 732 B1**
(45) Date de publication et mention de la délivrance du brevet: **16.09.2020**
(21) Numéro de dépôt: 15729501.5
(22) Date de dépôt: 18.06.2015
(51) Int. Cl.: B29C 49/78, B29C 49/42, B29C 49/46, B29C 49/06

(54) **PROCÉDÉ ET SYSTÈME**
VERFAHREN UND SYSTEM
METHOD AND SYSTEM

(30) Priorité: 18.06.2014 FR 1455617
(43) Date de publication de la demande: 26.04.2017
(73) Titulaire: Sidel Participations, 76930 Octeville-sur-Mer (FR)
(72) Inventeur: PLANTAMURA, Bernard, F-76053 Le Havre (FR)
(74) Mandataire: Grassin d'Alphonse, Emmanuel Jean Marie
(86) Numéro de dépôt international: PCT/EP2015/063677
(87) Numéro de publication internationale: WO 2015/193414

(56) Documents cités:
- WO-A1-2006/092651
- WO-A1-2014/075770
- DE-A1-102012 102 073
- DE-A1-102012 102 357
- US-A- 4 054 629
- US-A1- 2010 140 280
- US-A1- 2010 140 835

## Description

La présente invention concerne un procédé de production de récipients en matériau thermoplastique, ainsi qu'un système de production de récipients mettant en œuvre ce procédé.

L'invention se rapporte au domaine de la réalisation de récipients par soufflage d'air pressurisé dans des préformes chauffées agencées pour se déformer et acquérir la forme des récipients à produire sous l'effet de la pression de l'air.

De telles préformes sont généralement réalisées par injection d'un matériau thermoplastique, tel que le polytéréphtalate d'éthylène (PET), dans une cavité d'injection. Les préformes ainsi réalisées sont ensuite introduites dans la machine de production de récipients dans laquelle chaque préforme est d'abord chauffée à une température supérieure à la température de transition vitreuse du matériau thermoplastique de la préforme et inférieure à la température de cristallisation de ce matériau puis formée en un récipient sous l'effet de la pression de l'air injecté dans la préforme chauffée.

Un tel procédé de réalisation de récipients est classique et permet d'obtenir, de façon continue, reproductible et à une cadence élevée, des récipients, par exemple des bouteilles de toute forme et de toute contenance, robustes et aptes à recevoir et à stocker un liquide de remplissage.

Il arrive cependant qu'au cours de la production, certains récipients ne présentent pas la forme et/ou la qualité souhaitées et ne soient pas propres à l'utilisation que l'on souhaite en faire, sans pour autant que les paramètres de la machine aient été modifiés. Ainsi, le rendement de la machine peut être diminué par les récipients non conformes obtenus en sortie de machine. Lorsque le nombre de récipients non conformes est important, la machine doit être arrêtée et inspectée afin de déterminer et corriger les causes de ces dysfonctionnements, selon qu'ils sont de nature mécanique de la machine, de paramètres de production inadaptés, ou de variation de qualité des préformes introduites. Le rendement de la ligne de production est alors diminué de façon conséquente puisque la machine est immobilisée pendant la durée de cette inspection. En outre, il arrive que la cause du dysfonctionnement ne soit pas clairement identifiée et que la production reprenne sans qu'il ait été fourni une véritable explication sur l'origine du problème. Dans ce cas, la machine continue de produire ponctuellement des récipients non conformes qui sont mis au rebut et l'on accepte que le rendement de la machine soit réduit par ces récipients.

L'un des buts de l'invention vise à pallier ces inconvénients en proposant un procédé de production de récipients permettant d'identifier de façon simple au moins une cause possible de dysfonctionnement sans nécessiter l'arrêt de la machine.

Le document DE 10 2012 102073 A1 décrit un procédé pour contrôler des préformes grâce à au moins une caméra.

Le document DE102012102357 décrit des procédés et systèmes selon les préambules des revendications 1, 2 et 10.

Le document WO 2014/075770 A1 décrit un procédé pour contrôler le col de préformes grâce à un système d'inspection comprenant un objectif stéréoscopique.

L'invention a pour but de proposer d'autres méthodes pour produire des récipients en identifiant de façon simple au moins une cause possible de dysfonctionnement sans nécessiter l'arrêt de la machine.

A cet effet, l'invention concerne des procédés et systèmes selon les revendications 1, 2 et 10.

Le procédé selon l'invention permet donc de vérifier la qualité des préformes destinées à être formées en récipients. En effet, la demanderesse a constaté que la qualité des récipients obtenus après soufflage dépend grandement de la qualité des préformes utilisées avant soufflage et notamment des contraintes internes du matériau thermoplastique des préformes. Ces contraintes internes sont issues du procédé d'injection du matériau thermoplastique utilisé pour réaliser les préformes et sont « libérées », ou relâchées, lors du chauffage des préformes. Lorsque les contraintes internes dans une préforme sont trop importantes ou mal réparties, l'étape de formage du récipient peut ne pas se dérouler correctement et aboutir à un récipient n'ayant pas la forme ou la répartition d'épaisseur souhaitées ou des défauts de transparence, voire n'étant pas complètement formé et/ou n'étant pas apte à recevoir un liquide de remplissage sans se rompre. Ainsi, la qualité de l'injection du matériau thermoplastique pour former les préformes a un impact important sur la qualité des récipients obtenus après le chauffage et l'expansion des préformes.

Ainsi, en vérifiant la qualité des préformes avant et après le chauffage, il est possible de mesurer l'impact de la libération des contraintes sur la qualité des préformes avant le soufflage.

L'influence des contraintes internes est d'autant plus importante que la température de chauffage est largement au-dessus de la température de transition vitreuse du matériau de la préforme. Une telle température de chauffage, voisine de 130°C pour le PET, est notamment nécessaire pour des préformes subissant à la fois une expansion axiale importante, ou élongation, et une expansion radiale, selon une technique dite de « bi-orientation ». Les emballages de petite contenance allégés sont particulièrement sensibles à ce type de problème, plus particulièrement lorsque l'épaisseur de la paroi de la préforme est faible, par exemple de l'ordre de 1,5 mm.

Dans ce cas, si les contraintes internes ne sont pas réparties de façon homogène dans la préforme et/ou si leur intensité est trop grande, l'expansion de la préforme a de fortes chances de donner lieu à un récipient non conforme à ce qui est attendu.

Le procédé, en proposant l'analyse d'un paramètre de contrainte représentatif des contraintes internes du matériau plastique issues du procédé d'injection des préformes, permet de vérifier la qualité des préformes subissant une expansion et de déterminer si une éventuelle non-conformité d'un récipient est due à la qualité de la préforme plutôt qu'au procédé de production du récipient. Ainsi, il n'est pas nécessairement requis d'arrêter la machine pour rechercher des causes de dysfonctionnement en cas de qualité non satisfaisante des préformes.

Selon une autre caractéristique du procédé selon l'invention, le paramètre de contrainte corrélé à la contrainte interne du matériau thermoplastique est la dispersion circonférentielle maximale de la contrainte interne du matériau thermoplastique, mesurée sur la hauteur de la préforme analysée.

En choisissant ce paramètre de contrainte, lié à la répartition des contraintes internes dans le matériau de la préforme, la qualité de la préforme peut être déterminée par une simple comparaison de la forme de la préforme, avant et après son chauffage.

A cet effet, selon une caractéristique du procédé selon l'invention, l'étape de détermination de la valeur du paramètre de contrainte est réalisée sur la préforme, avant et après l'étape de chauffage, et avant l'étape d'injection d'air pressurisé dans ladite préforme chauffée.

La libération des contraintes au cours du chauffage de la préforme permet de rendre visible l'effet de ces contraintes sur la préforme après son chauffage. La dispersion latérale maximale est ainsi visible, et se manifeste par une irrégularité dans la forme de la préforme, par exemple une flexion anormale de la préforme dans un plan axial comprenant l'axe de la préforme, désignée par l'expression « effet banane ». Il est ainsi possible de déterminer qu'une préforme n'est pas satisfaisante en comparant la forme de la préforme analysée avec la forme d'une préforme satisfaisante, c'est-à-dire d'une préforme dont le matériau présente des contraintes internes en deçà d'une valeur maximale acceptable.

Selon d'autres caractéristiques de l'invention :
- l'étape de détermination de la valeur du paramètre de contrainte est réalisée par l'acquisition d'au moins une image de la préforme chauffée et l'étape de comparaison de la valeur déterminée à une plage de valeurs acceptables est réalisée par comparaison de l'image acquise à au moins une image de référence d'une préforme chauffée de référence ayant une valeur maximale de flexion latérale acceptable ; et
- la préforme chauffée est déplacée en rotation au moins au cours de l'étape de détermination de la valeur du paramètre de contrainte, ladite étape de détermination étant réalisée par l'acquisition d'une pluralité d'images de la préforme chauffée analysée à différentes positions angulaires de ladite préforme chauffée analysée et par le traitement des images acquises de sorte à identifier au moins une image correspondant à la flexion latérale maximale de la préforme analysée, l'étape de comparaison étant réalisée en comparant ladite image acquise identifiée à ladite image de référence.

Selon une variante de l'invention, l'étape de détermination de la valeur du paramètre de contrainte est réalisée par l'acquisition d'au moins une image de la préforme initiale et au moins une image de la préforme chauffée. La au moins une image de la préforme initiale et la au moins une image de la préforme chauffée sont utilisées par une unité de contrôle pour déterminer une déformation réelle maximale de ladite préforme. Ensuite, pendant une étape de comparaison, la déformation réelle maximale est comparée à une valeur maximale de flexion latérale acceptable pouvant être déterminée par une image de référence d'une préforme chauffée de référence.

Ainsi, par simple prise d'images ou de films de la préforme analysée, on peut déterminer si la préforme est satisfaisante ou non.

Selon une autre caractéristique du procédé selon l'invention, le paramètre de contrainte comprend la variation de hauteur et/ou du diamètre extérieur du corps de la préforme analysée avant et après l'étape de chauffage de ladite préforme analysée, l'étape de détermination de la valeur dudit paramètre comprenant une étape de mesure de la hauteur et/ou du diamètre extérieur du corps de la préforme avant l'étape de chauffage, une étape de mesure de la hauteur et/ou du diamètre extérieur du corps de la même préforme après l'étape de chauffage et une étape de détermination de la variation de ladite hauteur et/ou du diamètre extérieur du corps.

Un autre phénomène lié à la répartition des contraintes peut être observé en mesurant la variation de hauteur selon la direction axiale de la préforme et/ou du diamètre extérieur du corps de la préforme avant le chauffage et après le chauffage. Si cette variation se trouve en dehors de la plage satisfaisante, la préforme risque de ne pas se souffler de la façon souhaitée. La variation de hauteur et/ou du diamètre extérieur du corps peut également être déterminée par des prises de vues de la préforme analysée. Une prise de vue supplémentaire avant le chauffage de la préforme est prévue.

Selon une d'autres caractéristiques du procédé selon l'invention :
- le paramètre de contrainte est l'intensité de la contrainte interne du matériau thermoplastique de la préforme analysée ;
- l'étape de détermination de la valeur d'un paramètre de contrainte parmi le au moins un paramètre de contrainte est réalisée par l'exposition de la préforme initiale analysée à une lumière polarisée circulairement et par l'acquisition à travers un deuxième polariseur circulaire croisé de l'image ou du film d'interférences de la lumière polarisée incidente ayant traversé la préforme initiale et l'étape de comparaison de la valeur déterminée à une plage de valeurs acceptables est réalisée par comparaison de l'image ou du film acquis à l'image ou au film d'interférences d'une lumière polarisée ayant traversé une ou plusieurs préformes de référence, ladite ou lesdites préformes de référence présentant une valeur du paramètre de contrainte comprise dans ou aux extrêmes de la plage de valeurs acceptables.

L'analyse de l'image d'interférences d'une lumière polarisée ayant traversé la préforme analysée permet de déterminer l'intensité des contraintes internes du matériau de la préforme avant même que la préforme ne soit chauffée, c'est-à-dire que cette analyse peut être réalisée en amont du four et peut permettre d'alerter sur une dérive des préformes reçues.

Selon une autre caractéristique du procédé selon l'invention, l'étape d'injection d'air pressurisé dans la préforme chauffée n'est pas réalisée lorsque le signal de sortie a été émis après que l'étape de comparaison a été réalisée sur ladite préforme analysée, la préforme analysée étant préférablement évacuée avant ladite étape d'injection d'air pressurisé.

Le procédé selon l'invention peut être adapté pour que seules des préformes satisfaisantes soit formées en récipients afin de garantir l'obtention de récipients satisfaisants en sortie de la station de formage.

Selon d'autres caractéristiques du procédé selon l'invention :
- le signal de sortie est un signal d'alarme audible et/ou visible ; et
- le procédé comprend, préalablement à l'étape d'alimenter le four en préformes, une étape de fabrication des préformes initiales par injection du matériau thermoplastique dans une cavité de moulage ayant la forme des préformes à réaliser, les paramètres d'injection du matériau thermoplastique étant modifiés pour réduire la contrainte interne dans le matériau thermoplastique des préformes injectées lorsque le signal de sortie est émis.

Le signal de sortie peut être exploité pour avertir les opérateurs de la machine d'un potentiel défaut de formage des récipients et/ou pour modifier les paramètres d'injection des préformes si il est constaté que de nombreuses préformes réalisées avec des paramètres d'injection particuliers ne sont pas satisfaisantes. Ainsi, le procédé peut être utilisé pour améliorer la réalisation des préformes et limiter les risques d'avoir des préformes non satisfaisantes.

Selon un autre aspect, l'invention concerne un système de production d'une succession de récipient, comprenant au moins un four apte à chauffer une succession de préformes initiales et une station de formage comprenant des moyens d'injection d'air pressurisé dans des préformes chauffées pour former une succession de récipients dans la station de formage, la machine comprenant en outre un dispositif d'analyse agencé pour mettre en œuvre l'étape d'analyse d'un procédé de production tel que défini ci-dessus.

Selon d'autres caractéristiques du système de production de récipients selon l'invention :
- le dispositif d'analyse comprend au moins un dispositif optique amont disposé en amont du four et un dispositif optique aval disposé entre le four et la station de formage, le dispositif optique amont et le dispositif optique aval étant agencés pour acquérir au moins une image ou un film de chaque préforme à analyser, le dispositif d'analyse étant agencé pour déterminer la variation de hauteur et/ou du diamètre extérieur du corps de chaque préforme lors du chauffage de chacune des préformes initiale et/ou une valeur maximale de flexion latérale de chacune des préformes chauffées ;
- le dispositif d'analyse comprend un dispositif équipé d'une source de lumière polarisée circulairement et d'un dispositif d'acquisition à travers un deuxième polariseur croisé de l'image ou du film d'interférences de la lumière polarisée incidente ayant traversé chaque préforme initiale, ledit dispositif étant disposé en amont du four ; et
- le système comprend en outre une presse d'injection de préformes raccordée au dispositif d'analyse, et un moyen de transport de type premier entré/premier sorti des préformes entre la presse d'injection et le four.

D'autres aspects et avantages de l'invention apparaîtront à la lecture de la description qui suit, donnée à titre d'exemple et faite en référence aux dessins annexés, dans lesquels :
- la Fig. 1 est une représentation schématique de dessus d'un mode de réalisation du système de production de récipients permettant de mettre en œuvre un ou des procédés selon l'invention,
- la Fig. 2 est une représentation schématique en coupe de différentes préformes ayant différentes valeurs de paramètres de contrainte corrélées à la contrainte interne du matériau thermoplastique de la préforme,
- la Fig. 3 est une représentation schématique d'une image d'interférences en lumière polarisée au travers d'une préforme lorsque la contrainte interne présente une intensité et une répartition satisfaisantes,
- la Fig. 4 est une représentation schématique d'images d'interférences en lumière polarisée au travers de différentes préformes lorsque la contrainte interne ne présente pas une intensité ou une répartition satisfaisante et
- la Fig. 5 est un graphique représentant la valeur du paramètre de contrainte de préformes successives circulant dans le système de production de récipients.

Dans la description, les termes « amont » et « aval » sont relatifs à la direction de circulation des préformes et des récipients formés dans le système de production.

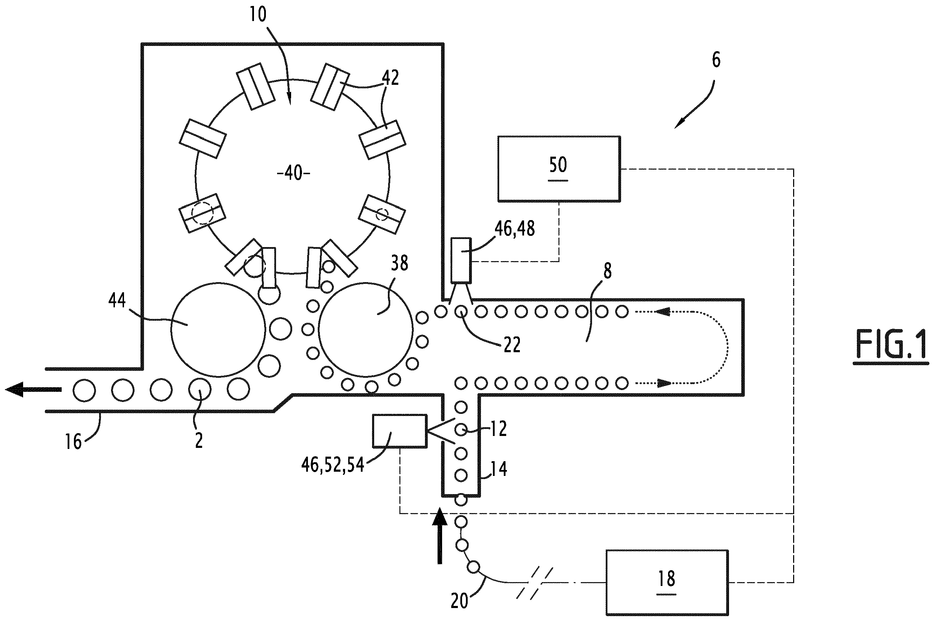

En référence à la Fig. 1, on décrit un système de production de récipients 2 par injection d'air pressurisé dans des préformes successives.

En dehors du dispositif d'analyse des préformes qui sera décrit ultérieurement, un premier mode de réalisation du système comprend une machine **6** de soufflage qui est classique dans le domaine technique du soufflage de préformes. La machine 6 de soufflage est équipée d'un four **8** et d'une station **10** de formage. Des préformes **12** initiales pénètrent dans le four 8 par une entrée **14** en amont de la machine 6, et les récipients 2 sortent de la station 10 de formage par une sortie **16** en aval de la machine 6. La machine 6 de soufflage comprend en outre des moyens de transport des préformes 12 initiales de l'entrée 14 à la station 10 de formage et de transport de récipients 2 formés de la station 10 de formage à la sortie 16.

Un deuxième mode de réalisation du système comprend, outre la machine 6, une presse **18** d'injection arrangée de manière connue pour réaliser des préformes en matériau thermoplastique. Le système comprend aussi un moyen **20** de transport de type FI/FO (First In/ First Out, c'est-à-dire premier entré/premier sorti) des préformes réalisées par la presse 18 d'injection vers le four 8 et permet de fournir ainsi les préformes 12 initiales à l'entrée 14 du four 8.

Selon l'un ou l'autre des modes de réalisation du système, une succession de préformes 12 initiales est placée dans la machine 6 de soufflage à l'entrée 14 de celle-ci. Les préformes 12 initiales sont successivement chauffées par le four 8, c'est-à-dire que les préformes 12 initiales voient leur chauffage commencer successivement les unes après les autres et se terminer dans le même ordre. On désignera par l'expression « préformes **22** chauffées » les préformes sortant du four 8.

Chaque préforme 12 initiale, ou paraison, est réalisée préalablement par injection d'un matériau thermoplastique dans une cavité de moulage ayant la forme de la préforme à obtenir. Le matériau thermoplastique est par exemple choisi parmi les polyesters, tels que le polytéréphtalate d'éthylène (PET), le polyéthylène naphtalate (PEN), le polyéthylène imine (PEI), le polytriméthylène téréphtalate (PTT), l'acide polyactique (PLA), le polyéthylène furanoate (PEF), ou les polyoléfines, tels que le polyéthylène basse densité (PEBD) ou haute densité (PEHD), le polypropylène (PP), ou les matériaux à base de styrène, tels que le polystyrène (PS), ou d'autres polymères , tels que le polychlorure de vinyle (PVC), ou un mélange de ces matériaux.

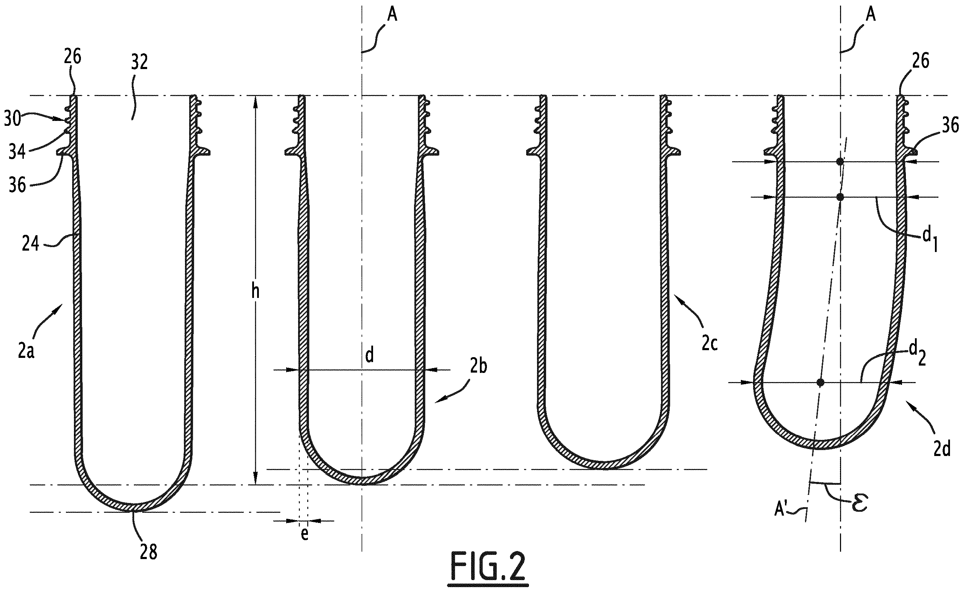

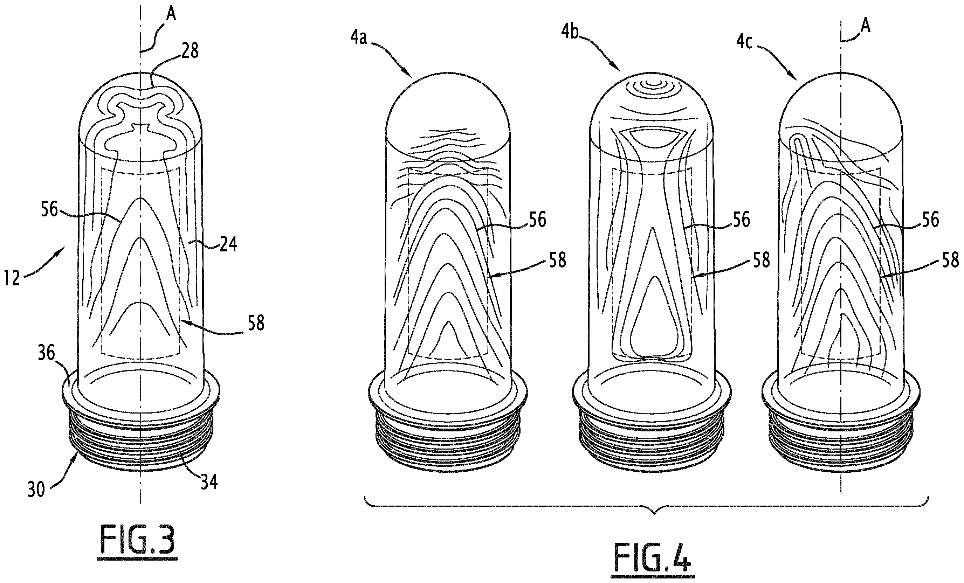

Chaque préforme 12 initiale présente par exemple la forme générale d'un tube à essai. Ainsi, chaque préforme 12 initiale comprend un corps **24** ayant la forme d'un tube s'étendant selon un axe longitudinal A et présentant une forme de U en section longitudinale, c'est-à-dire dans un plan axial contentant l'axe longitudinal A. Les préformes 12 initiales présentent une partie **26** extrême ouverte et, à l'autre extrémité, une partie **28** extrême fermée, comme représenté sur les Fig. 2 et 3. La partie 26 extrême ouverte présente par exemple la forme définitive du col **30** du récipient à former, c'est-à-dire que le col 30 ne verra pas sa forme modifiée au cours du procédé de formage. Le col 30 définit une ouverture 32 interne s'étendant selon l'axe longitudinal A et délimitée par une paroi dont la face externe est par exemple pourvue d'un filetage **34** permettant au récipient 2 de recevoir un bouchon par vissage. La partie 28 extrême fermée présente par exemple une forme hémisphérique. La forme décrite ci-dessus est donnée à titre d'exemple non limitatif et d'autres formes peuvent être envisagées, par exemple une autre forme de col 30, dépourvu de filetage, comprenant ou non un épaulement 36 externe s'étendant radialement sensiblement perpendiculairement à l'axe longitudinal A.

Dans le premier mode de réalisation du système, les préformes 12 initiales peuvent être réalisées sur un site différent du site où se trouve la machine 6 de soufflage, de sorte que les préformes sont stockées et transportées ensemble sur le site de la machine.

Dans le deuxième mode de réalisation du système, les préformes 12 initiales peuvent être réalisées directement en amont de l'entrée de la machine 6 de soufflage de sorte que les préformes injectées sortent de leur cavité de moulage et sont transférées à l'entrée 14 de la machine de soufflage. Cela permet de réduire l'énergie nécessaire à chauffer les préformes avant leur soufflage.

Un tel procédé d'injection, dans lequel le matériau thermoplastique est injecté dans la cavité de moulage à une température à laquelle il est visqueux de sorte à remplir la cavité puis est refroidi de sorte à former une préforme rigide, entraîne la présence de contraintes internes dans le matériau de la préforme en raison des différences de flux de matière, de vitesses de refroidissement, de pression de la matière etc. en différents endroits de la cavité de moulage, notamment en fonction de la distance séparant ces endroits de la ou des buses d'injection du matériau thermoplastique dans la cavité de moulage, et des réglages de pression de maintien destinés à compenser les variations de densité du matériau au cours du refroidissement. Les préformes de faible épaisseur, par exemple de l'ordre de 1,5 mm, sont particulièrement propices à subir des niveaux de contraintes très élevés. Ces contraintes internes peuvent entraîner des différences de comportement lors de la déformation de la préforme au cours du procédé de formage lorsque la préforme a été chauffée, ce qui a eu pour conséquence de libérer les contraintes internes, comme cela sera décrit ultérieurement.

Les dimensions de la préforme 12 initiales dépendent du récipient 2 à réaliser. On définit la hauteur h de la préforme 12 comme la longueur de la préforme de sa partie 28 extrême fermée à sa partie 26 extrême ouverte selon l'axe longitudinal A et son diamètre d comme étant le plus grand diamètre du corps 24 dans un plan radial perpendiculaire à l'axe longitudinal A, comme représenté sur la Fig. 2. On définit l'épaisseur e de la préforme comme étant la distance séparant la face externe de la préforme 12 de sa face interne.

A titre d'exemple pour produire un récipient du type bouteille, la hauteur h est comprise entre 40 mm et 160 mm, le diamètre d est compris entre 16 mm et 45 mm et l'épaisseur e est de l'ordre de 1,5 mm à 7 mm.

Les préformes 12 initiales sont transmises de l'entrée 14 du four 8 dans lequel elles circulent par exemple les unes à la suite des autres en suivant un trajet dont la longueur est prévue pour que les préformes soient à une température prédéterminée en sortie du four 8. Le four 8 comprend par exemple une enceinte chauffée constituée de un ou plusieurs modules et des moyens de transport des préformes le long d'un trajet défini dans cette enceinte chauffée. Selon un mode de réalisation, les moyens de transport sont en outre agencés pour faire tourner les préformes en cours de chauffage autour de leur axe longitudinal A pendant le trajet afin d'assurer un chauffage homogène sur tout le pourtour de la préforme 22 chauffée. Un tel four 8 est connu et ne sera pas décrit plus en détail ici.

En sortie du four 8, les préformes 22 chauffées sont à une température comprise entre la température de transition vitreuse du matériau de la préforme et sa température de cristallisation, de sorte à obtenir, en sortie du four 8, des préformes 22 chauffées molles et aptes à être déformées sous l'effet d'une pression injectée à l'intérieur, c'est-à-dire des préformes malléables. La température est telle que les préformes conservent toutefois leur forme à la pression atmosphérique, c'est-à-dire qu'elles n'ont pas tendance à se déformer sans pression exercée sur elles. A titre d'exemple, pour une préforme en PET dans les plages de dimensions indiquées précédemment, la préforme est chauffée à une température comprise entre 100°C et 140°C. Il convient de noter que plus la préforme doit subir une expansion importante selon une direction axiale et/ou selon des directions radiales, plus la préforme sera chauffée à une température au-dessus de la transition vitreuse, mais sans atteindre la température de cristallisation, par exemple aux alentours de 135°C pour une préforme en PET dans les plages de dimensions indiquées précédemment. Ainsi, pour les préformes à fort taux de bi-orientation, définissant l'élongation axiale et l'expansion radiale cumulées que doit subir la préforme, on cherche à travailler à des températures les plus élevées possibles, mais sans cristalliser le matériau de la préforme, pour permettre à la préforme de se déformer assez facilement pour atteindre la forme de récipient souhaitée sans qu'un phénomène de sur-étirage du matériau, caractéristique d'une température trop basse et/ou d'un taux d'étirage important, n'apparaisse.

Les préformes 22 chauffées sont ensuite transférées, par exemple au moyen d'une roue **38** de transfert, de la sortie du four 8 à l'entrée de la station 10 de formage, comme représenté sur la Fig. 1.

La station 10 de formage est par exemple formée, de façon connue par une roue **40,** mobile en rotation autour d'un axe longitudinal, et portant une pluralité de sous-stations agencées pour recevoir chacune une préforme et pour injecter de l'air pressurisé à l'intérieur de cette préforme. A cet effet, chaque sous-station comprend par exemple un moule **42,** définissant une cavité de moulage ayant la forme du récipient à produire et recevant la préforme, et des moyens d'injection d'air dans la préforme 22 chauffée. Les moyens d'injection comprennent un ensemble de vannes et une buse reliées à un premier réservoir d'air pressurisé, dans lequel l'air est pressurisé à une première pression, et à un deuxième réservoir d'air pressurisé, dans lequel l'air est pressurisé à une deuxième pression supérieure à la première pression. De façon connue, la buse est mise en communication fluidique avec l'ouverture 32 interne de la préforme dans le moule 42 et injecte l'air du premier réservoir de sorte à déformer la préforme, dont le corps 24 s'étend vers la paroi de la cavité de moulage, puis, lorsque la préforme a presque terminé sa déformation, la buse injecte l'air du deuxième réservoir de sorte à créer un pic de pression dans la préforme, ce qui permet de plaquer complètement la paroi de la préforme contre la paroi du moule afin de former complètement le récipient. L'étape d'expansion de la préforme peut être accompagnée d'une assistance à l'élongation de la préforme au moyen d'une tige d'élongation appuyant sur la partie extrême fermée 28 de la préforme afin d'assister la déformation axiale de la préforme. Un tel procédé de formation de récipient par injection d'air dans une préforme est connu sous le nom de « bi-orientation » et ne sera pas décrit plus en détail ici.

Les récipients 2 ainsi formés sont ensuite récupérés en sortie de la station 10 de formage et transférés vers la sortie 16 par exemple par une roue **44** de transfert. En sortie de la machine 6 de soufflage, les récipients 2 peuvent être récupérés et transportés jusqu'à une machine de remplissage, dans laquelle les récipients sont remplis avec le produit final qu'ils doivent contenir, puis fermés. En variante, la machine intègre une station de remplissage et de fermeture des récipients en aval de la station de formage et en amont de la sortie, de sorte que des récipients remplis et fermés sont transférés en sortie de la machine.

Comme indiqué précédemment, lorsque les contraintes internes du matériau de la préforme sont d'une intensité supérieure à une intensité maximale ou lorsqu'elles sont mal réparties dans la préforme, l'opération de formage décrite ci-dessus peut donner lieu à des récipients non conformes à ce qui est souhaité, c'est-à-dire présentant des défauts de forme et/ou d'aspect et/ou de résistance mécanique les rendant impropres à l'utilisation que l'on souhaite en faire. Par la suite, on appellera préforme conforme, une préforme dont les contraintes internes permettent, après la chauffe, de limiter les déformations tant radiales, qu'axiales de la préforme, et préforme non conforme, une préforme dont les contraintes internes sont susceptibles de donner lieu à la réalisation d'un récipient non satisfaisant ou non conforme.

Afin de contrôler la qualité des préformes circulant dans la machine 6 de soufflage, ladite machine 6 de soufflage comprend un dispositif **46** d'analyse des préformes agencé pour déterminer la valeur d'au moins un paramètre corrélé aux contraintes internes dans le matériau de chaque préforme, appelé par la suite paramètre de contrainte, et pour comparer cette valeur à une plage de valeurs acceptables pour ce paramètre de contrainte afin de déterminer si chaque préforme est une préforme conforme ou une préforme non conforme.

Selon un mode de réalisation du procédé, le paramètre de contrainte est lié à la répartition des contraintes internes dans le matériau de la préforme et est défini par la variation de hauteur de la préforme analysée par rapport à une préforme conforme pour une température de chauffe donnée. Ce paramètre peut être estimé en observant la préforme et en mesurant l'écart de hauteur entre la préforme observée après son chauffage et une préforme conforme après son chauffage.

En effet, comme indiqué précédemment, au cours de l'étape de chauffage de la préforme, les contraintes internes dans le matériau de la préforme 22 chauffée sont relâchées, ce qui provoque une réduction de la hauteur et une augmentation du diamètre de la préforme, par rapport à la préforme 12 initiale.

Sur la Fig. 2, on a désigné par la référence 2a une préforme 12 initiale et par la référence 2c une préforme « de référence à rétraction maximum acceptable ». La référence 2b illustre une préforme 22 chauffée dont le corps 24 s'étendrait dans l'axe longitudinal et qui serait acceptable pour la température de chauffe considérée, c'est-à-dire, dont la hauteur h serait comprise entre celle de la préforme 12 initiale (dans ce cas où il n'y aurait quasiment pas eu de contraintes à relâcher lors du chauffage) et celle de la préforme de référence à rétraction maximum (dans le cas d'un maximum acceptable de contrainte dans la préforme 12 initiale), le diamètre extérieur « d » de la préforme 22 chauffée acceptable ayant subi une augmentation en conséquence.

Pour mettre en œuvre le procédé ci-dessus, le dispositif 46 d'analyse comprend une mémoire où sont stockées les images des préformes de référence 2a et 2c, qui constituent le gabarit déterminant la plage de valeurs acceptables pour la rétraction axiale.

Le dispositif 46 d'analyse comprend un dispositif **48** optique aval disposé en aval du four 8 et conçu pour déterminer la forme de la préforme 22 chauffée.

Le dispositif 46 d'analyse comprend en plus du dispositif 48 optique aval disposé en aval du four 8, un dispositif **52** optique amont disposé en regard des préformes 12 initiales, en amont du four 8 et conçu pour déterminer la forme des préformes 12 initiale.

Le dispositif 46 d'analyse comprend une unité **50** de contrôle. L'unité 50 de contrôle est raccordée au moyen 20 de transport. L'unité 50 de contrôle est équipée de moyens de calcul pour comparer la forme de la préforme 22 chauffée et la forme, déterminée quelques instants plus tôt par le dispositif 52 amont lorsque la même préforme était encore en regard du dispositif 52 optique amont, aux formes des deux préformes de référence 2a, 2c. De plus on pourrait avoir un capteur (non illustré) de la température de la préforme 22 chauffée et une formule de correction de la rétraction acceptable de la préforme conforme en fonction de sa température. Cette formule peut par exemple avoir été déterminée par des essais préalables sur des préformes du type de la préforme 12 initiale. L'unité 50 de contrôle est conçue pour déterminer si la préforme 22 chauffée analysée présente une rétraction axiale acceptable.

Selon une variante du procédé, la valeur, pour une préforme 12 initiale donnée, de la rétraction axiale subie lors de son chauffage est mesurée directement, sans référence à un gabarit. Pour mettre en œuvre cette variante, l'unité 50 de contrôle comprend une mémoire stockant une valeur maximum de rétraction axiale acceptable. L'unité 50 de contrôle est apte à calculer la rétraction axiale d'une préforme entre la forme de la préforme 12 initiale et la forme de la préforme chauffée 22. De plus on pourrait avoir un capteur (non illustré) de la température de la préforme 22 chauffée et une formule de correction de la rétraction acceptable. Le moyen 46 d'analyse est apte à comparer cette valeur à la rétraction axiale maximale acceptable et à émettre un signal en conséquence.

Une analyse analogue à celle décrite ci-dessous pourrait être réalisée en prenant comme paramètre de contrainte le diamètre extérieur du corps 24 de chaque préforme et en mesurant l'écart de diamètre entre la préforme observée avant et après son chauffage.

Selon un autre mode de réalisation du procédé, un paramètre de contrainte est la dispersion circonférentielle maximale de la contrainte interne du matériau thermoplastique, mesurée sur toute la hauteur de la préforme analysée.

Ce mode de réalisation est combiné à un des modes de réalisation décrit ci-dessus.

La préforme est considérée comme non conforme, si au moins un des paramètres de contrainte est en dehors de la plage de valeurs acceptables.

Au lieu de mesurer directement ce paramètre, le procédé propose d'en déterminer l'ordre de grandeur en observant en temps réel un effet de ce paramètre. En effet, si des contraintes internes varient le long d'un diamètre de la préforme 12 initiale, la relaxation de ces contraintes lors du chauffage se traduit par une flexion de la préforme 22 chauffée correspondante. Le procédé comprend l'étape d'observer la préforme et de mesurer la flexion de la préforme dans au moins un plan axial contentant l'axe longitudinal A, c'est-à-dire une déformation de la préforme selon une direction radiale par rapport à son axe longitudinal A. On parle alors d'effet « banane » du fait de la forme adoptée par la préforme en sortie du four 8. La valeur maximale acceptable est fixée par un gabarit désigné par la référence 2d sur la Fig. 2.

Comme illustré par la référence 2d, on peut mesurer le diamètre « d » extérieur à au moins une hauteur proche de l'extrémité fermée 28 de la préforme et selon différents angles autour de l'axe A, comme illustré par le diamètre d₂ de la Fig. 2. Cette mesure du diamètre peut également être réalisée à une autre hauteur de la préforme, par exemple comme illustré par le diamètre d₁ de la Fig. 2. Ensuite, on peut déterminer le(s) centre(s) du (des) diamètre(s) extérieur(s) (illustré(s) par un point gras), par exemple par calcul. L'axe A du col 30 est déterminé par exemple par analyse d'image comme étant l'axe qui passe par le centre du col et est perpendiculaire au plan de la collerette 36 ou au plan de la partie 26 extrême ouverte. On peut déterminer par calcul un axe A' passant par le centre du col et ledit ou lesdits centres des diamètres mesurés. Un écart angulaire « εₘₐₓ » maximal acceptable entre les axes A et A' est préalablement déterminé pour des préformes acceptables. Un tel paramètre de contrainte est représentatif de la flexion latérale maximale acceptable pour une préforme.

Ainsi, toute préforme 22 chauffée dont l'axe A' défini ci-dessus s'écarte d'une valeur angulaire « ε » supérieure à la valeur maximale « εₘₐₓ » par rapport à l'axe longitudinal de référence A sera considérée comme non conforme. A l'inverse, une préforme 22 chauffée dont l'écart « ε » entre les axes A et A' est inférieur à « εₘₐₓ » sera considérée comme une préforme conforme.

La plage de valeurs acceptables pour ce paramètre de contrainte peut en outre ou en variante être formée par la plage de diamètres à une hauteur prédéterminée s'étendant entre un diamètre minimal acceptable dₘᵢₙ et un diamètre maximal acceptable dₘₐₓ. En d'autres termes, si pour une préforme chauffée 22, d₁ et/ou d₂ est compris entre le diamètre minimal acceptable dₘᵢₙ et le diamètre maximal acceptable dₘₐₓ déterminé pour la hauteur à laquelle d₁ et/ou d₂ est mesuré, la préforme est considérée comme conforme. Egalement, toute préforme 22 chauffée dont le diamètre d à une hauteur donnée serait hors de la plage comprise entre dₘᵢₙ et dₘₐₓ pour cette hauteur sera considérée comme non conforme.

Plusieurs images de chaque préforme 22 chauffée sont acquises. En effet, pour déterminer si une partie de la paroi de la préforme 22 chauffée se trouve en dehors de la plage de valeurs acceptables, il est nécessaire de vérifier l'écart entre la paroi de la préforme et l'axe longitudinal A sur toute la circonférence de la préforme 2, c'est-à-dire à différentes positions angulaires de la préforme, puisque la déformation n'a pas lieu dans tous les plans axiaux de la préforme. Pour mettre en œuvre le procédé ci-dessus, la machine 6 de soufflage comprend un moyen de mise en rotation des préformes 22 chauffées autour de l'axe longitudinal A. L'unité 50 de contrôle acquiert plusieurs images de la préforme 22 chauffée dans différentes positions angulaires de la préforme face au dispositif 48 optique aval. L'écart angulaire entre deux prises de vue de la préforme est agencé pour qu'une déformation du profil de la préforme puisse être détectée quels que soient les plans axiaux dans lesquels l'écart par rapport à l'axe longitudinal A se produit. Ainsi, la préforme est tournée d'un angle inférieur ou égal à 90° entre deux prises de vue successives, de préférence d'un angle inférieur ou égal à 45°. Selon une variante, un film de la préforme 22 chauffée est réalisé pendant sa rotation afin d'obtenir une pluralité d'images du profil de la préforme 22 chauffée.

Les images acquises ou le film acquis sont ensuite transférés à l'unité 50 de contrôle et comparés au gabarit de référence selon la figure 2d. De plus on pourrait avoir un capteur (non illustré) de la température de la préforme 22 chauffée et une formule de correction de la rétraction acceptable en fonction de la température. Si l'une des images acquises ou l'une des images du film montrent un profil de la préforme divergeant radialement plus que dans le gabarit de référence 2d, alors il est déterminé que la préforme analysée est non conforme.

Il est à noter que dans la description ci-dessus, l'étape de comparaison du paramètre de contrainte mesuré avec la plage de valeurs acceptables pour ce paramètre a été décrite comme étant une comparaison d'images entre elles. Il n'est cependant pas nécessaire de mettre en œuvre cette comparaison d'images. Les images peuvent simplement être analysées pour déterminer la valeur du paramètre de contrainte mesuré puis cette valeur être comparée avec la plage de valeurs acceptables qui a été prédéterminée pour une préforme conforme. Par exemple, une valeur de déport latéral peut être calculée pour chaque image acquise et chaque déport latéral mesuré est comparé à une valeur de référence maximale acceptable préenregistrée pour ce déport.

En variante ou en plus des paramètres ci-dessus, la variation de la dispersion circonférentielle maximale de la contrainte interne du matériau thermoplastique entre la préforme initiale 12 et la préforme chauffée 22, ou déformation réelle maximale, est choisie comme paramètre de contrainte.

En variante ou en plus des paramètres décrits ci-dessus, l'écart-type de la variation de hauteur subie par une préforme 12 initiale au cours de son passage dans le four 8 peut être choisi comme paramètre de contrainte. En effet, comme indiqué précédemment, le relâchement des contraintes dans la préforme au cours de son chauffage peut faire varier la hauteur h de celle-ci par rapport à la hauteur qu'elle présentait à froid. Certains types de récipients à fabriquer supportent des préformes 12 initiales à contraintes élevées se relâchant lors du chauffage, on sera attentif alors principalement à l'écart-type de la variation de hauteur des préformes 22 chauffées. D'autres types de récipients sont plus sensibles (récipients de petite contenance allégés par exemple) on sera alors attentif au niveau de contraintes, c'est-à-dire à la valeur de rétraction axiale maximum et/ou au déport latéral maximum.

Le dispositif 48 optique aval et/ou le dispositif 52 optique amont peuvent être par exemple une caméra agissant dans le domaine du visible. On peut également utiliser des capteurs optiques de distance ou de profil (confocal, interférométrique, triangulation laser,...).

Selon un autre mode de réalisation, un paramètre de contrainte est déterminé par l'acquisition d'une ou plusieurs images ou d'un film d'interférences d'une lumière polarisée passée au travers de chaque préforme 2 circulant dans la machine avant son passage dans la station de chauffage, c'est-à-dire passée au travers d'une préforme 2 froide.

Ce mode de réalisation est combiné à au moins un des modes de réalisation décrit ci-dessus, dans lequel un paramètre de contrainte est mesurée après le chauffage de la préforme.

En variante, seule la dispersion circonférentielle maximale de la contrainte interne du matériau thermoplastique comme décrit précédemment est mesurée en plus de l'analyse par lumière polarisée.

La préforme est considérée comme non conforme, si au moins un des paramètres de contrainte est en dehors de la plage de valeurs acceptables.

Pour mettre en œuvre le procédé ci-dessus, la machine 6 de soufflage comprend un dispositif **54** disposé en amont du four 8 et composé d'une source de lumière polarisée circulairement et d'une caméra capable d'acquérir à travers un deuxième polariseur circulaire croisé une image de la lumière polarisée incidente transmise par la préforme 12 initiale. Cette image ou succession d'images d'interférences permettent d'observer l'intensité et la répartition des contraintes internes dans le matériau de la préforme, comme cela a été représenté sur les Fig. 3 et 4. En effet, dans de telles images, les contraintes internes donnent lieu à des franges **56** d'interférences, en forme de vagues successives ou de flammes, s'étendant dans la paroi de la préforme, la répartition et la forme de ces franges 56 donnant des indications sur la répartition et l'intensité des contraintes internes dans le matériau de la préforme.

Sur la Fig. 3, on a représenté une image d'interférences obtenue en lumière blanche ou monochromatique entre polariseurs croisés pour une préforme de référence conforme. Cette image peut être utilisée comme un gabarit permettant de comparer les images d'interférences obtenues pour chaque préforme circulant dans la machine afin de déterminer si la répartition et l'intensité des contraintes internes est satisfaisante ou non. Pour ce faire, on définit par exemple un cadre **58,** à l'intérieur duquel l'image en deux dimensions d'interférences sera analysée. Le cadre 58 s'étend par exemple sur le corps 24 de la préforme 12 initiale à l'écart du col 30 afin d'obtenir un échantillon représentatif de la répartition et de l'intensité des contraintes internes dans le matériau de la préforme présent dans le cadre 58. Quand l'image est obtenue en lumière blanche, on peut repérer le numéro d'ordre des franges, par exemple par analyse colorimétrique. De préférence le cadre 58 est rectangulaire et s'étend en hauteur sur la plus grande partie, environ 90% de la portion cylindrique de la préforme 12 initiale et en largeur sur 50% ou 70% de la largeur de la préforme 12 initiale. L'image en deux dimensions de la préforme 12 initiale est analysée, par exemple en comptant le nombre de franges 56 s'étendant à l'intérieur de ce cadre 58, et/ou en mesurant la position du sommet de franges 56 dans la cadre 58. Le nombre et/ou la position des franges 56 est/sont comparé(s) à une plage de valeurs acceptables définie par un nombre maximal de franges 56 et/ou une tolérance de position de ces franges 56 dans le cadre 58 pour une préforme conforme. Ainsi, si le nombre de franges 56 compté dans le cadre 58 d'une image d'interférences issue d'une lumière passée dans une préforme 12 initiale est supérieur au nombre maximal de franges, et/ou si la position de ces franges mesurées est plus près du col 30 que dans l'image de la préforme conforme, alors la préforme 12 initiale analysée est considérée comme étant non conforme, comme représenté par les préformes 4a et 4c de la Fig. 4 dans lesquelles le nombre de franges 56 présentes dans le cadre 58 est largement supérieur au nombre de franges 56 présentes dans le cadre 58 de la préforme de référence conforme de la Fig. 3.

En plus du nombre de franges 56 dans le cadre 58, le paramètre de contrainte peut également comprendre un degré de symétrie des franges 56 dans le cadre 58. Ainsi, on peut définir un axe de symétrie passant au centre du cadre 42, par exemple défini par l'axe A de la préforme 12 initiale, et vérifier la symétrie des franges 56 par rapport à cet axe de symétrie. On peut définir un défaut de symétrie maximum au-dessus duquel la préforme ne sera pas considérée comme conforme. Par exemple, le défaut de symétrie maximum peut être défini comme un pourcentage, par rapport au nombre de franges présentes dans le cadre 58, de franges symétriques par rapport à l'axe de symétrie dans le cadre 58. Ainsi, si le pourcentage de franges symétriques dans le cadre 58 d'une image d'interférences liée à une préforme donnée est insuffisant, cette préforme donnée sera considérée comme non conforme. Cela est représenté par la préforme 4c de la Fig. 4, dans laquelle les franges 56 présentes à proximité de la partie 28 extrême fermée de la préforme ne sont pas symétriques par rapport à l'axe longitudinal A.

Comme pour le paramètre de contrainte lié à la flexion de la préforme 12 initiale, l'analyse des franges 46 est améliorée si plusieurs images prises dans différentes positions angulaires de la préforme sont acquises afin d'obtenir une représentation des contraintes internes dans le matériau de la préforme analysée sur la plus grande partie possible de la circonférence de la préforme. Finalement, si le nombre de franges 56 est inférieur à la limite acceptable (figure 4b) et/ou que le défaut de symétrie des franges 56 est inférieur au défaut maximum et/ou que les franges 56 sont homogènes sur toute la circonférence, alors la préforme 12 initiale est conforme.

Pour mettre en œuvre l'analyse décrite ci-dessus, le dispositif d'analyse de la machine conforme à cet autre mode de réalisation comprend une source de lumière polarisée circulairement et un dispositif d'acquisition d'images ou de films d'interférences de la lumière polarisée ayant traversé chaque préforme. La source de lumière, les deux polariseurs circulaires croisés et le dispositif d'acquisition sont disposés de part et d'autre d'une partie du trajet suivi par les préformes 12 initiale entre l'entrée 4 et la station de chauffage 8 de la machine de sorte que chaque préforme passe entre la source de lumière, les deux polariseurs et le dispositif d'acquisition en amont de la station de chauffage 8. En utilisant les moyens de transport de cette station pour transporter les préformes entre la source de lumière et le dispositif d'acquisition, les préformes peuvent être mises en rotation autour de leur axe pendant l'acquisition d'images afin d'obtenir des images dans différentes positions angulaires de chaque préforme.

Une fois les images ou le film d'interférences acquis, l'unité centrale est utilisée pour déterminer la valeur du ou des paramètres de contrainte, par exemple le nombre de franges 56 (ou le numéro d'ordre maximum de frange en lumière blanche) dans le cadre 58 et/ou l'homogénéité des franges le long de la circonférence et/ou le défaut de symétrie des franges dans le cadre, et pour comparer la valeur à la plage de valeurs acceptables pour la température de chauffe du four 8 au moment de l'analyse de sorte qu'il est déterminé pour chaque préforme circulant dans la machine si la préforme est conforme ou non conforme.

En variante ou en plus des paramètres ci-dessus, la variation du ou des paramètres de contrainte, par exemple le nombre de franges 56 (ou le numéro d'ordre maximum de frange en lumière blanche) dans le cadre 58 et/ou l'homogénéité des franges le long de la circonférence et/ou le défaut de symétrie des franges dans le cadre, entre la préforme initiale 12 et la préforme chauffée 22 peut être choisie comme paramètre(s) de contrainte.

La détermination en continu et pour chaque préforme circulant dans la machine de la conformité des préformes permet d'assurer un contrôle continu de la qualité des préformes utilisées pour réaliser les récipients.

Lorsqu'une préforme analysée est déterminée comme étant non conforme, alors que le procédé de chauffage et la température de la préforme 22 chauffée sont considérés stables et maitrisés, le procédé selon l'invention prévoit l'émission par la machine, par exemple par son unité centrale 38, d'un signal de sortie. Ce signal est donc émis lorsque la valeur du ou d'au moins un des paramètres de contrainte mesurés est en dehors de la plage de valeurs acceptables pour ce paramètre de contrainte.

Le signal de sortie peut être exploité de différentes façons.

Le signal de sortie peut simplement être un signal sonore et/ou visible à l'intention des opérateurs de la machine afin de les informer de la présence d'une préforme non conforme dans la machine et du risque d'obtenir un récipient impropre l'utilisation que l'on souhaite en faire.

En variante ou en plus, le signal de sortie peut être utilisé pour déclencher une éjection de la préforme non conforme avant que celle-ci subisse l'étape de formage ou une éjection du récipient obtenu suite au formage d'une préforme non conforme. Ainsi, on s'assure que seuls des récipients issus de préformes conformes seront utilisés pour le remplissage.

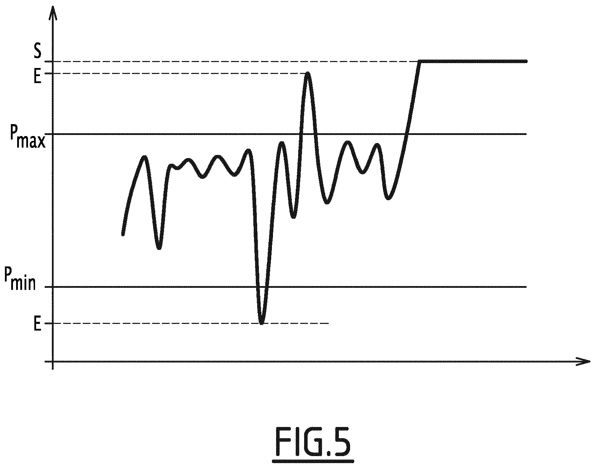

Sur la Fig. 5, on a représenté un graphique montrant en abscisse la succession de préformes analysées et en ordonnée la valeur du paramètre de contrainte mesurée. Les lignes Pₘᵢₙ et Pₘₐₓ représentent respectivement la borne inférieure et la borne supérieure de la plage de valeurs acceptables pour le paramètre de contrainte mesuré.

On a identifié aux points E de l'ordonnée de ce graphique les préformes pour lesquels une éjection de la préforme ou du récipient obtenu est déclenchée. En effet, en ces points E, on peut constater que la valeur du paramètre de contrainte mesurée est en dehors de la plage définie par Pₘᵢₙ et par Pₘₐₓ.

Au point S, on a identifié une succession importante de préformes dont la valeur du paramètre de contrainte mesurée est en dehors de la plage de valeurs acceptables pour la température de chauffe utilisée. Un tel cas peut se produire par exemple lorsqu'un lot de préformes entier n'a pas été réalisé avec des paramètres d'injection ou avec un matériau acceptables. Si une telle succession, donnant lieu à l'émission d'un signal de sortie en continu, est constatée, le signal de sortie peut être utilisé pour arrêter la machine, afin d'en retirer le lot de préformes non conformes et de les remplacer par un autre lot de préformes et ainsi éviter que la machine ne fonctionne que pour réaliser des récipients non satisfaisants.

Par exemple, le fait de disposer d'un enregistrement continu et statistique d'au moins un paramètre corrélé à la qualité du lot de préformes permet de vérifier si la qualité des récipients 2 soufflés dépend beaucoup ou non des valeurs enregistrées sur les préformes. Une reprise des réglages de la souffleuse peut suffire à faire de bons récipient si la qualité des préformes est très répétitive, même avec de valeurs de paramètres de contraintes élevés.

En variante ou en plus, le signal de sortie peut être utilisé pour déclencher une modification des paramètres d'injection des préformes afin de réduire les contraintes internes dans le matériau de ces préformes. En effet, le signal de sortie est représentatif d'une répartition ou d'une intensité des contraintes internes dans une préforme inacceptable et peut donc être exploité pour faire modifier les paramètres d'injection qui sont la cause de cette répartition ou intensité inacceptable.

Le procédé et la machine décrits ci-dessus permettent de contrôler en continu, ou en « ligne », la qualité des préformes circulant dans la machine au moyen de l'analyse d'un paramètre corrélé aux contraintes internes, ou stress, dans le matériau de la préforme afin de déterminer les causes d'une éventuelle qualité dégradée des récipients produits par la machine. Il est à noter que l'analyse d'un paramètre corrélé aux contraintes internes est différente d'un contrôle thermique effectué sur les préformes chauffées, utilisé pour déterminer si une préforme a été chauffée de façon uniforme avant d'être formée en récipient. En effet, un tel contrôle thermique, réalisé par exemple au moyen d'une caméra thermographique, ne permet pas de déterminer la valeur d'un paramètre corrélé aux contraintes internes dans le matériau d'une préforme.

Le fait de comprendre une étape d'analyse avant l'étape de chauffage et une étape d'analyse après l'étape de chauffage permet notamment de mesurer différents paramètres de contrainte, rendant compte du relâchement des contraintes internes dans le matériau de la préforme au cours de l'étape de chauffage.

La combinaison de différents paramètres de contrainte peut améliorer la détection de préformes non acceptables.

## Revendications

1. Procédé de production d'une succession de récipients (2), le procédé comprenant les étapes suivantes :
- alimenter un four (8) avec une succession de préformes (12) initiales réalisées en un matériau thermoplastique,
- chauffer successivement dans le four (8) chacune des préformes (12) initiales pour en faire des préformes (22) chauffées,
- transférer les préformes (22) chauffées à une station (10) de formage et
- injecter successivement de l'air pressurisé dans chaque préforme (22) chauffée pour former une succession de récipients (2) dans ladite station (10) de formage,
où le procédé comprend la définition d'au moins un paramètre de contrainte corrélé à la contrainte interne du matériau thermoplastique dans la préforme et la définition d'une plage de valeurs acceptables pour ledit paramètre, le procédé comprenant une étape d'analyse de chacune des préformes (12) initiales et de chacune des préformes (22) chauffées, ladite étape d'analyse comprenant les étapes suivantes pour chacune des préformes analysées :
- déterminer une valeur dudit paramètre de contrainte de la préforme analysée,
- comparer la valeur déterminée à la plage de valeurs acceptables,
- émettre un signal de sortie lorsque la valeur déterminée est en dehors de la plage de valeurs acceptables ;
**caractérisé en ce que**
le paramètre de contrainte comprend la variation de hauteur (h) et/ou du diamètre extérieur du corps (24) de la préforme analysée avant et après l'étape de chauffage de ladite préforme analysée, l'étape de détermination de la valeur dudit paramètre comprenant une étape de mesure de la hauteur (h) et/ou du diamètre extérieur du corps (24) de la préforme avant l'étape de chauffage, une étape de mesure de la hauteur et/ou du diamètre extérieur du corps (24) de la même préforme après l'étape de chauffage et une étape de détermination de la variation de ladite hauteur et/ou du diamètre extérieur du corps (24).

2. Procédé de production d'une succession de récipients (2), le procédé comprenant les étapes suivantes :
- alimenter un four (8) avec une succession de préformes (12) initiales réalisées en un matériau thermoplastique,
- chauffer successivement dans le four (8) chacune des préformes (12) initiales pour en faire des préformes (22) chauffées,
- transférer les préformes (22) chauffées à une station (10) de formage et
- injecter successivement de l'air pressurisé dans chaque préforme (22) chauffée pour former une succession de récipients (2) dans ladite station (10) de formage,
où le procédé comprend la définition d'au moins un paramètre de contrainte corrélé à la contrainte interne du matériau thermoplastique dans la préforme et la définition d'une plage de valeurs acceptables pour ledit paramètre, le procédé comprenant une étape d'analyse de chacune des préformes (12) initiales et de chacune des préformes (22) chauffées, ladite étape d'analyse comprenant les étapes suivantes pour chacune des préformes analysées :
- déterminer une valeur dudit paramètre de contrainte de la préforme analysée,
- comparer la valeur déterminée à la plage de valeurs acceptables,
- émettre un signal de sortie lorsque la valeur déterminée est en dehors de la plage de valeurs acceptables ; et dans lequel l'étape de détermination de la valeur du paramètre de contrainte est réalisée sur la préforme initiale (12) et la préforme (22) chauffée, avant l'étape d'injection d'air pressurisé dans ladite préforme (22) chauffée, et est réalisée par l'acquisition d'au moins une image de la préforme initiale (12) et au moins une image de la préforme (22) chauffée
**caractérisé en ce que**
l'étape de comparaison de la valeur déterminée à une plage de valeurs acceptables est réalisée par comparaison des images acquises à au moins une image (2d) de référence d'une préforme chauffée de référence ayant une valeur maximale de flexion latérale acceptable.

3. Procédé selon la revendication 2, dans lequel le paramètre de contrainte corrélé à la contrainte interne du matériau thermoplastique est la dispersion circonférentielle maximale de la contrainte interne du matériau thermoplastique, mesurée sur la hauteur (h) de la préforme analysée.

4. Procédé selon la revendication 2, **caractérisé en ce que** la préforme chauffée est déplacée en rotation au moins au cours de l'étape de détermination de la valeur du paramètre de contrainte, ladite étape de détermination étant réalisée par l'acquisition d'une pluralité d'images de la préforme (22) chauffée analysée à différentes positions angulaires de ladite préforme chauffée analysée et par le traitement des images acquises de sorte à identifier au moins une image correspondant à la flexion latérale maximale de la préforme analysée, l'étape de comparaison étant réalisée en comparant ladite image acquise identifiée à ladite image (2d) de référence.

5. Procédé selon la revendication 1, dans lequel un paramètre de contrainte parmi le au moins un paramètre de contrainte est l'intensité de la contrainte interne du matériau thermoplastique de la préforme analysée.

6. Procédé selon la revendication 5, dans lequel l'étape de détermination de la valeur du paramètre de contrainte est réalisé par l'exposition de la préforme (12) initiale analysée à une lumière polarisée circulairement et par l'acquisition à travers un deuxième polariseur circulaire croisé de l'image ou du film d'interférences de la lumière polarisée incidente ayant traversé la préforme (12) initiale et l'étape de comparaison de la valeur déterminée à une plage de valeurs acceptables est réalisée par comparaison de l'image ou du film acquis à l'image ou au film d'interférences d'une lumière polarisée ayant traversé une ou plusieurs préformes de référence, ladite ou lesdites préformes de référence présentant une valeur du paramètre de contrainte comprise dans ou aux extrêmes de la plage de valeurs acceptables.

7. Procédé selon l'une quelconque des revendications 1 à 6, dans lequel l'étape d'injection d'air pressurisé dans la préforme (22) chauffée n'est pas réalisée lorsque le signal de sortie a été émis après que l'étape de comparaison a été réalisée sur ladite préforme analysée (12, 22), la préforme analysée étant préférablement évacuée avant ladite étape d'injection d'air pressurisé.

8. Procédé selon l'une quelconque des revendications 1 à 7, dans lequel le signal de sortie est un signal d'alarme audible et/ou visible.

9. Procédé selon l'une quelconque des revendications 1 à 8, comprenant, préalablement à l'étape d'alimenter le four (8) en préformes, une étape de fabrication des préformes (12) initiales par injection du matériau thermoplastique dans une cavité de moulage ayant la forme des préformes à réaliser, les paramètres d'injection du matériau thermoplastique étant modifiés pour réduire la contrainte interne dans le matériau thermoplastique des préformes injectées lorsque le signal de sortie est émis.

10. Système de production d'une succession de récipients (2), comprenant au moins un four (8) apte à chauffer une succession de préformes (12) initiales et une station (10) de formage comprenant des moyens d'injection d'air pressurisé dans des préformes (22) chauffées pour former une succession de récipients (2) dans la station (10) de formage, où le système comprend en outre un dispositif (46) d'analyse équipé d'au moins un dispositif (52) optique amont disposé en amont du four (8) et un dispositif (48) optique aval disposé entre le four (8) et la station (10) de formage, le dispositif (52) optique amont et le dispositif (48) optique aval étant agencés pour acquérir au moins une image ou un film de chaque préforme à analyser,
**caractérisé en ce que**
le système est agencé pour mettre en oeuvre l'étape d'analyse d'un procédé de production selon l'une quelconque des revendications 1 à 9, **en ce que** le dispositif (46) d'analyse étant agencé pour déterminer la variation de hauteur et/ou du diamètre extérieur du corps (24) de chaque préforme lors du chauffage de chacune des préformes (12) initiale et/ou une valeur maximale de flexion latérale de chacune des préformes chauffées.

11. Système selon la revendication 10, dans lequel le dispositif (46) d'analyse comprend un dispositif (54) équipé d'une source de lumière polarisée circulairement et d'un dispositif d'acquisition à travers un deuxième polariseur croisé de l'image ou du film d'interférences de la lumière polarisée incidente ayant traversé chaque préforme initiale (12), ledit dispositif (54) étant disposé en amont du four (8).

12. Système selon l'une des revendications 10 ou 11, comprenant en outre une presse (18) d'injection de préformes raccordée au dispositif (46) d'analyse, et un moyen (20) de transport de type premier entré/premier sorti des préformes entre la presse (18) d'injection et le four (8).

## Patentansprüche

1. Verfahren zur Herstellung einer Folge von Behältern (2), wobei das Verfahren die folgenden Schritte enthält:
- Beschicken eines Ofens (8) mit einer Folge von aus einem thermoplastischen Werkstoff hergestellten anfänglichen Vorformlingen (12),
- aufeinanderfolgendes Erwärmen jedes der anfänglichen Vorformlinge (12) im Ofen (8), um daraus erwärmte Vorformlinge (22) zu machen,
- Übertragen der erwärmten Vorformlinge (22) zu einer Formungsstation (10) und
- aufeinanderfolgendes Einblasen von Druckluft in jeden erwärmten Vorformling (22), um eine Folge von Behältern (2) in der Formungsstation (10) zu formen,
wobei das Verfahren die Definition mindestens eines mit der inneren Spannung des thermoplastischen Werkstoffs im Vorformling korrelierten Spannungsparameters und die Definition eines Bereichs von für den Parameter akzeptablen Werten enthält, wobei das Verfahren einen Schritt der Analyse jedes der anfänglichen Vorformlinge (12) und jedes der erwärmten Vorformlinge (22) enthält, wobei der Analyseschritt die folgenden Schritte für jeden der analysierten Vorformlinge enthält:
- Bestimmen eines Werts des Spannungsparameters des analysierten Vorformlings,
- Vergleichen des bestimmten Werts mit dem Bereich akzeptabler Werte,
- Senden eines Ausgangssignals, wenn der bestimmte Wert außerhalb des Bereichs akzeptabler Werte liegt;
**dadurch gekennzeichnet, dass** der Spannungsparameter die Veränderung der Höhe (h) und/oder des Außendurchmessers des Körpers (24) des analysierten Vorformlings vor und nach dem Erwärmungsschritt des analysierten Vorformlings enthält, wobei der Schritt der Bestimmung des Werts des Parameters einen Schritt der Messung der Höhe (h) und/oder des Außendurchmessers des Körpers (24) des Vorformlings vor dem Erwärmungsschritt, einen Schritt der Messung der Höhe und/oder des Außendurchmessers des Körpers (24) des gleichen Vorformlings nach dem Erwärmungsschritt und einen Schritt der Bestimmung der Veränderung der Höhe und/oder des Außendurchmessers des Körpers (24) enthält.

2. Verfahren zur Herstellung einer Folge von Behältern (2), wobei das Verfahren die folgenden Schritte enthält:
- Beschicken eines Ofens (8) mit einer Folge von anfänglichen Vorformlingen (12) aus einem thermoplastischen Werkstoff,
- aufeinanderfolgendes Erwärmen jedes der anfänglichen Vorformlinge (12) im Ofen (8), um daraus erwärmte Vorformlinge (22) zu machen,
- Übertragen der erwärmten Vorformlinge (22) zu einer Formungsstation (10) und
- aufeinanderfolgendes Einblasen von Druckluft in jeden erwärmten Vorformling (22), um eine Folge von Behältern (2) in der Formungsstation (10) zu formen,
wobei das Verfahren die Definition mindestens eines mit der inneren Spannung des thermoplastischen Werkstoffs im Vorformling korrelierten Spannungsparameters und die Definition eines Bereichs akzeptabler Werte für den Parameter enthält, wobei das Verfahren einen Schritt der Analyse jedes der anfänglichen Vorformlinge (12) und jedes der erwärmten Vorformlinge (22) enthält, wobei der Analyseschritt die folgenden Schritte für jeden der analysierten Vorformlinge enthält:
- Bestimmen eines Werts des Spannungsparameters des analysierten Vorformlings,
- Vergleichen des bestimmten Werts mit dem Bereich akzeptabler Werte,
- Senden eines Ausgangssignals, wenn der bestimmte Wert außerhalb des Bereichs akzeptabler Werte liegt;
und wobei der Schritt der Bestimmung des Werts des Spannungsparameters beim anfänglichen Vorformling (12) und beim erwärmten Vorformling (22) vor dem Schritt des Einblasens von Druckluft in den erwärmten Vorformling (22) durchgeführt wird, und durch die Erfassung mindestens eines Bilds des anfänglichen Vorformlings (12) und mindestens eines Bilds des erwärmten Vorformlings (22) durchgeführt wird,
**dadurch gekennzeichnet, dass**
der Schritt des Vergleichs des bestimmten Werts mit einem Bereich akzeptabler Werte durch Vergleich der erfassten Bilder mit mindestens einem Bezugsbild (2d) eines erwärmten Bezugsvorformlings durchgeführt wird, der einen akzeptablen maximalen Wert seitlicher Biegung hat.

3. Verfahren nach Anspruch 2, wobei der mit der inneren Spannung des thermoplastischen Werkstoffs korrelierte Spannungsparameter die maximale Umfangsstreuung der inneren Spannung des thermoplastischen Werkstoffs ist, gemessen über die Höhe (h) des analysierten Vorformlings.

4. Verfahren nach Anspruch 2, **dadurch gekennzeichnet, dass** der erwärmte Vorformling mindestens während des Schritts der Bestimmung des Werts des Spannungsparameters in Drehung verschoben wird, wobei der Bestimmungsschritt durch die Erfassung einer Vielzahl von Bildern des analysierten erwärmten Vorformlings (22) in verschiedenen Winkelstellungen des analysierten erwärmten Vorformlings und durch die Verarbeitung der erfassten Bilder durchgeführt wird, um mindestens ein Bild entsprechend der maximalen seitlichen Biegung des analysierten Vorformlings zu erkennen, wobei der Vergleichsschritt durchgeführt wird, indem das erkannte erfasste Bild mit dem Bezugsbild (2d) verglichen wird.

5. Verfahren nach Anspruch 1, wobei ein Spannungsparameter unter dem mindestens einem Spannungsparameter die Intensität der inneren Spannung des thermoplastischen Werkstoffs des analysierten Vorformlings ist.

6. Verfahren nach Anspruch 5, wobei der Schritt der Bestimmung des Werts des Spannungsparameters durch die Exposition des analysierten anfänglichen Vorformlings (12) gegenüber einem zirkular polarisierten Licht und durch die Erfassung über einen zweiten gekreuzten zirkularen Polarisator des Bilds oder des Films von Interferenzen des einfallenden polarisierten Lichts, das den anfänglichen Vorformling (12) durchquert hat, durchgeführt wird, und der Schritt des Vergleichs des bestimmten Werts mit einem Bereich akzeptabler Werte durch Vergleich des erfassten Bilds oder Films mit dem Bild oder Film von Interferenzen eines polarisierten Lichts durchgeführt wird, das einen oder mehrere Bezugs-Vorformlinge durchquert hat, wobei der oder die Bezugs-Vorformlinge einen Wert des Spannungsparameters aufweisen, der in oder an den Extremen des Bereichs akzeptabler Werte enthalten ist.

7. Verfahren nach einem der Ansprüche 1 bis 6, wobei der Schritt des Einblasens von Druckluft in den erwärmten Vorformling (22) nicht durchgeführt wird, wenn das Ausgangssignal gesendet wurde, nachdem der Vergleichsschritt am analysierten Vorformling (12, 22) durchgeführt wurde, wobei der analysierte Vorformling vorzugsweise vor dem Schritt des Einblasens von Druckluft entfernt wurde.

8. Verfahren nach einem der Ansprüche 1 bis 7, wobei das Ausgangssignal ein hörbares und/oder sichtbares Alarmsignal ist.

9. Verfahren nach einem der Ansprüche 1 bis 8, das vor dem Schritt der Beschickung des Ofens (8) mit Vorformlingen einen Schritt der Erzeugung der anfänglichen Vorformlinge (12) durch Einspritzen des thermoplastischen Werkstoffs in einen Formhohlraum enthält, der die Form der herzustellenden Vorformlinge hat, wobei die Einspritzparameter des thermoplastischen Werkstoffs verändert werden, um die innere Spannung im thermoplastischen Werkstoff der eingespritzten Vorformlinge zu reduzieren, wenn das Ausgangssignal gesendet wird.

10. System zur Herstellung einer Folge von Behältern (2), das mindestens einen Ofen (8), der eine Folge von anfänglichen Vorformlingen (12) erwärmen kann, und eine Formungsstation (10) enthält, die Einrichtungen zum Einblasen von Druckluft in erwärmte Vorformlinge (22) enthält, um eine Folge von Behältern (2) in der Formungsstation (10) zu formen, wobei das System außerdem eine Analysevorrichtung (46), die mit mindestens einer stromaufwärts vor dem Ofen (8) angeordneten optischen Vorrichtung (52) ausgerüstet ist, und eine stromabwärtige optische Vorrichtung (48) enthält, die zwischen dem Ofen (8) und der Formungsstation (10) angeordnet ist, wobei die stromaufwärtige optische Vorrichtung (52) und die stromabwärtige optische Vorrichtung (48) eingerichtet sind, um mindestens ein Bild oder einen Film jedes zu analysierenden Vorformlings zu erfassen,
**dadurch gekennzeichnet, dass** das System eingerichtet ist, um den Analyseschritt eines Herstellungsverfahrens nach einem der Ansprüche 1 bis 9 durchzuführen, dass die Analysevorrichtung (46) eingerichtet ist, um die Veränderung der Höhe und/oder des Außendurchmessers des Körpers (24) jedes Vorformlings beim Erwärmen jedes der anfänglichen Vorformlinge (12) und/oder einen maximalen Wert seitlicher Biegung jedes der erwärmten Vorformlinge zu bestimmen.

11. System nach Anspruch 10, wobei die Analysevorrichtung (46) eine Vorrichtung (54) enthält, die mit einer Quelle zirkular polarisierten Lichts und mit einer Vorrichtung zur Erfassung über einen zweiten gekreuzten Polarisator des Bilds oder des Films von Interferenzen des einfallenden polarisierten Lichts ausgestattet ist, das jeden anfänglichen Vorformling (12) durchquert hat, wobei die Vorrichtung (54) stromaufwärts vor dem Ofen (8) angeordnet ist.

12. System nach einem der Ansprüche 10 oder 11, das außerdem eine Spritzgussmaschine (18) von Vorformlingen, die an die Analysevorrichtung (46) angeschlossen ist, und eine Transporteinrichtung (20) der Art First In/First Out der Vorformlinge zwischen der Spritzgussmaschine (18) und dem Ofen (8) enthält.

## Claims

1. Method for producing a succession of containers (2), the method comprising the following steps:
- supplying an oven (8) with a succession of initial preforms (12) produced in a thermoplastic material
- in the oven (8), successively heating each of the initial preforms (12) to make heated preforms (22) thereof,
- transferring the heated preforms (22) to a forming station (10), and
- successively injecting pressurized air into each heated preform (22) to form a succession of containers (2) in the said forming station (10),
in which the method comprises the definition of at least one constraint parameter correlated with the internal stress of the thermoplastic material in the preform and the definition of a range of acceptable values for said parameter, the method comprising a step of analysing each of the initial preforms (12) and each of the heated preforms (22), said analysis step comprising the following steps for each of the preforms analysed:
- determining a value of said constraint parameter of the preform analysed,
- comparing the determined value to the range of acceptable values,
- emitting an output signal when the determined value is outside of the range of acceptable values; **characterized in that** the constraint parameter comprises the variation of height (h) and/or of the outer diameter of the body (24) of the preform analysed before and after the step of heating of said analysed preform, the step of determination of the value of said parameter comprising a step of measurement of the height (h) and/or of the outer diameter of the body (24) of the preform before the heating step, a step of measurement of the height and/or of the outer diameter of the body (24) of the same preform after the heating step and a step of determination of the variation of said height and/or of the outer diameter of the body (24).

2. Method for producing a succession of containers (2), the method comprising the following steps:
- supplying an oven (8) with a succession of initial preforms (12) produced in a thermoplastic material,
- in the oven (8), successively heating each of the initial preforms (12) to make heated preforms (22) thereof,
- transferring the heated preforms (22) to a forming station (10), and
- successively injecting pressurized air into each heated preform (22) to form a succession of containers (2) in said forming station (10),
in which the method comprises the definition of at least one constraint parameter correlated with the internal stress of the thermoplastic material in the preform and the definition of a range of acceptable values for said parameter, the method comprising a step of analysing each of the initial preforms (12) and each of the heated preforms (22), said analysis step comprising the following steps for each of the preforms analysed:
- determining a value of said constraint parameter for the preform analysed,
- comparing the determined value to the range of acceptable values,
- emitting an output signal when the determined value is outside of the range of acceptable values;
and wherein the step of determination of the value of the constraint parameter is performed on the initial preform (12) and the heated preform (22), before the step of injection of pressurized air into said heated preform (22), and is performed by the acquisition of at least one image of the initial preform (12) and at least one image of the heated preform (22),
**characterized in that**
the step of comparison of the determined value to a range of acceptable values is performed by comparison of the images acquired with at least one reference image (2d) of a reference heated preform having a maximum acceptable lateral deflection value.

3. Method according to Claim 2, wherein the constraint parameter correlated with the internal stress of the thermoplastic material is the maximum circumferential dispersion of the internal stress of the thermoplastic material, measured on the height (h) of the preform analysed.

4. Method according to Claim 2, **characterized in that** the heated preform is displaced in rotation at least during the step of determination of the value of the constraint parameter, said determination step being performed by the acquisition of a plurality of images of the analysed heated preform (22) at different angular positions of said analysed heat preform and by the processing of the acquired images so as to identify at least one image corresponding to the maximum lateral deflection of the preform analysed, the comparison step being performed by comparing said identified acquired image to said reference image (2d).

5. Method according to Claim 1, wherein a constraint parameter from among the at least one constraint parameter is the intensity of the internal stress of the thermoplastic material of the preform analysed.

6. Method according to Claim 5, wherein the step of determination of the value of the constraint parameter is performed by the exposure of the initial preform (12) analysed to a circularly polarized light and by the acquisition through a second cross-circular polarizer of the image or of the film of interferences of the incident polarized light having passed through the initial preform (12) and the step of comparison of the determined value to a range of acceptable values is performed by comparison of the image or of the film acquired to the image or to the film of interferences of a polarized light having passed through one or more reference preforms, said reference preform or preforms having a value of the constraint parameter lying within or at the limits of the range of acceptable values.

7. Method according to any one of Claims 1 to 6, wherein the step of injection of pressurized air into the heated preform (22) is not performed when the output signal has been emitted after the comparison step has been performed on said analysed preform (12, 22), the analysed preform being preferably discharged before said pressurized air injection step.

8. Method according to any one of Claims 1 to 7, wherein the output signal is an audible and/or visible alarm signal.

9. Method according to any one of Claims 1 to 8, comprising, prior to the step of supplying the oven (8) with preforms, a step of production of the initial preforms (12) by injection of the thermoplastic material into a moulding cavity having the form of the preforms to be produced, the parameters of injection of the thermoplastic material being modified to reduce the internal stress in the thermoplastic material of the injected preforms when the output signal is emitted.

10. System for producing a succession of containers (2), comprising at least one oven (8) capable of heating a succession of initial preforms (12) and a forming station (10) comprising means for injecting pressurized air into heated preforms (22) to form a succession of containers (2) in the forming station (10), in which the system also comprises an analysis device (46) equipped with at least one upstream optical device (52) disposed upstream of the oven (8) and a downstream optical device (48) disposed between the oven (8) and the forming station (10), the upstream optical device (52) and the downstream optical device (48) being arranged to acquire at least one image or one film of each preform to be analysed,
**characterized in that**
the system is arranged to implement the analysis step of a production method according to any one of Claims 1 to 9, **in that** the analysis device (46) is arranged to determine the variation of height and/or of the outer diameter of the body (24) of each preform upon the heating of each of the initial preforms (12) and/or a maximum lateral deflection value of each of the heated preforms.

11. System according to Claim 10, wherein the analysis device (46) comprises a device (54) equipped with a circularly polarized light source and a device for acquisition, through a second cross-polarizer, of the image or of the film of interferences of the incident polarized light having passed through each initial preform (12), said device (54) being disposed upstream of the oven (8).

12. System according to one of Claims 10 and 11, also comprising a preform injection press (18) connected to the analysis device (46), and a transport means (20) of first in/first out type for the preforms between the injection press (18) and the oven (8).
